# EUROPEAN PATENT APPLICATION

(11) **EP 1 578 121 A2**
(43) Date of publication of application: **21.09.2005**
(21) Application number: 05251523.6
(22) Date of filing: 14.03.2005
(51) Int. Cl.: H04N 5/445

(54) **Image data storing method and image processing apparatus**

(30) Priority: 16.03.2004 JP 2004074900
(71) Applicant: SONY CORPORATION, Tokyo 141 (JP)
(72) Inventor: Sadazumi, Takeshi, c/o Sony Corporation, Tokyo (JP); Kaneko, Toshiyuki, c/o Sony EMCS Corporation, Tokyo (JP)
(74) Representative: Mills, Julia

(57) **Abstract**

An image data storing method and an image processing apparatus are provided in which when background image data and a plurality of display object data selectively combined with the background image data to be displayed are stored in a predetermined memory unit (30), specific display object data selected from the display object data is combined with the background image data to generate composite image data; the composite image data is compression-coded and stored in the memory unit separately from the background image data; and when displaying a composite image in which the specific display object data and the background image data are combined, the compression-coded image data stored in the memory means is decompressed and displayed.

## Description

The present invention relates to the field of image data storing methods and image processing apparatus, illustrative embodiments of the present invention relate to image data storing methods and image processing apparatus suitable to be applied to an electronic device performing, for example, various kinds of GUI (Graphic User Interface) displays.

In the past, in the case where a GUI image based on a user operation or the like is displayed in a display connected to an electronic device or in a display unit incorporated in the electronic device, image data constituting an image to be displayed is stored in a memory means such as a ROM which is incorporated in the electronic device and the stored image data is read out to display the image based on the operation.

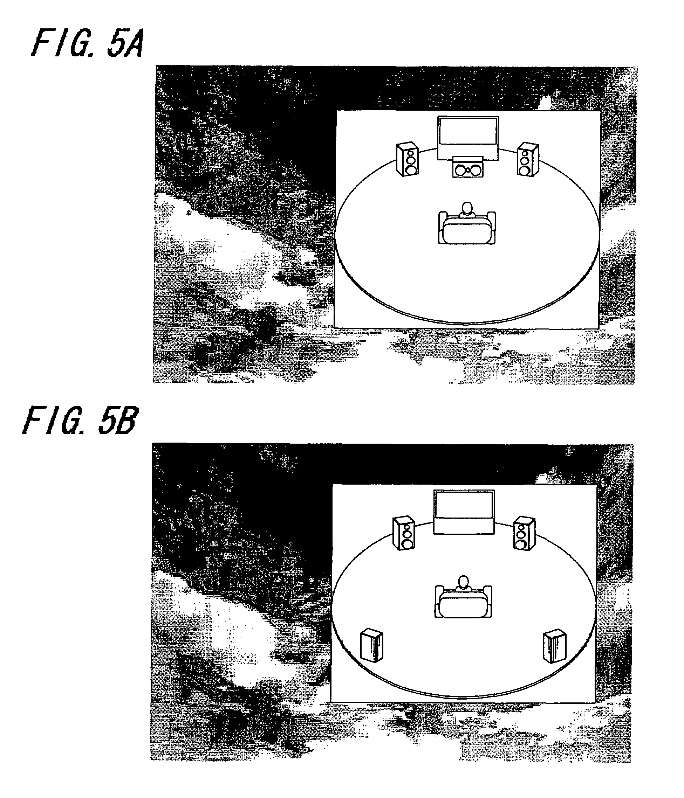

For example, an assumption is made to such a case that a picture for selecting a connection status (arranged state) of a speaker apparatus is displayed on a screen of a connected display in an audio apparatus such as a DVD (Digital Video Disc or Digital Versatile Disc) reproducing apparatus and a connection state is selected based on the screen. FIGS. 5A and 5B are views showing display examples of this case. FIG. 5A shows a display example in which a circle is displayed with a sofa where a viewer sits positioned in the center thereof, a receiver is displayed in front of this circle, front speakers are arranged on the right and left sides of this receiver, and a center speaker is arranged right in front of the receiver. When such a picture is displayed and a user operation is performed to fix the displayed arrangement, a stereo mode performing reproduction in the corresponding speaker arrangement is set.

Further, FIG. 5B shows a display example in which the front speakers are arranged on the right and left sides of the receiver, and rear speakers are arranged on the right and the left backsides of the sofa where the viewer sits. When such a picture is displayed and a user operation is performed to fix the displayed arrangement, a surround mode performing reproduction of surround sound in the corresponding speaker arrangement is set.

When those examples of FIGS. 5A and 5B are displayed, in a portion other than the screen to set the speaker arrangement is displayed a background image prepared in advance, for example.

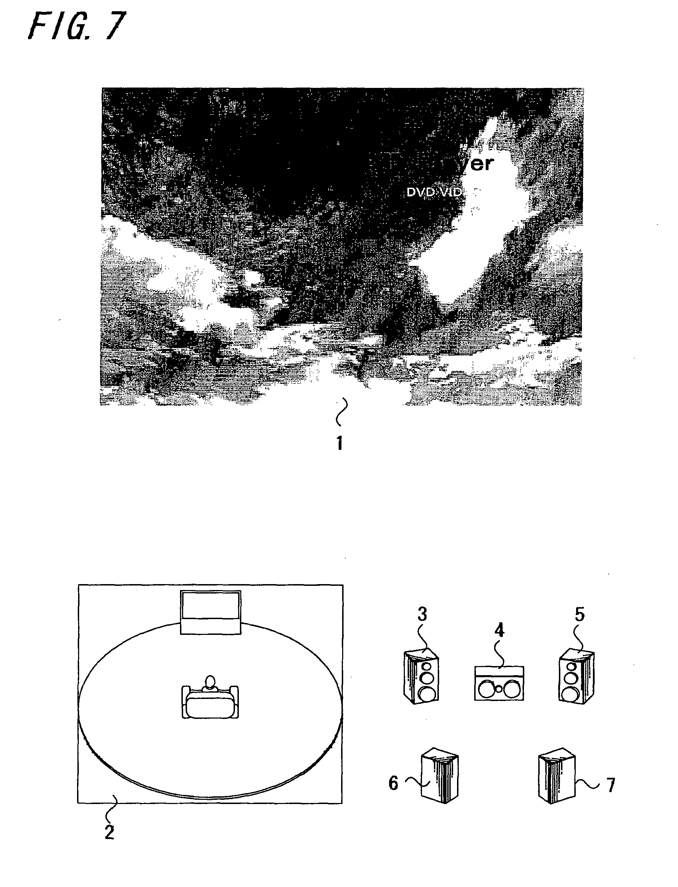

When displays such as shown in FIGS. 5A and 5B are performed, image data on elements constituting each part of the image are prepared and stored in memory means in the audio apparatus as shown in FIG. 7, for example. Specifically, seven image data in total including image data on a background image 1, image data on an image 2 in which the sofa and the receiver are displayed on a disc (data on interior space status), image data on the right and left front speakers 3, 5, image data on the center speaker 4, and image data on the right and left rear speakers 6, 7 (individual display data on speakers) are used. Each image data is stored in the memory means as the image data of bitmap form.

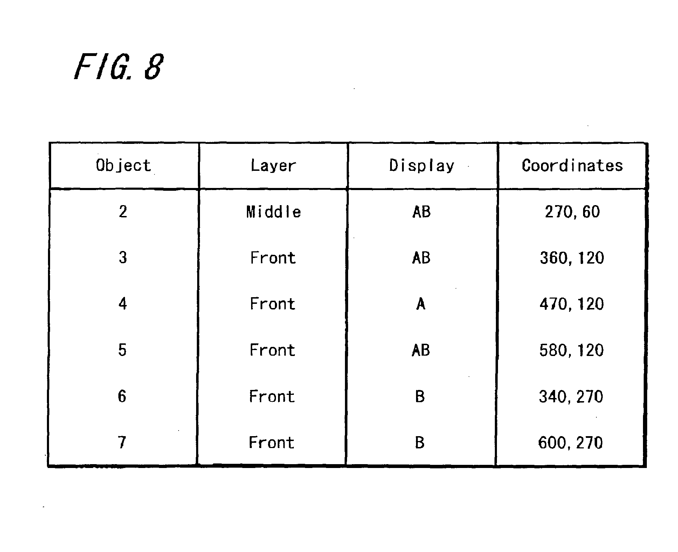

When displaying the above, for example, as described in a table shown in FIG. 8, data on a "display layer" of objects 2 through 7 (numerals of those objects 2 through 7 correspond to the numerals of the images shown in FIG. 7) which are display objects superimposed and displayed on the background image 1, data on a "display" showing the display mode of either FIG. 5A or FIG. 5B and data on "coordinates" showing horizontal and vertical positions on the coordinates when displaying are referred to and the corresponding display in each display mode is performed. In addition, as the "display layer", settings have been made such that the background image 1 is positioned in the back, the image 2 displaying the sofa and the receiver on the disc is positioned in the middle, and each image of speakers is positioned in the front.

Thus, an image display in which the display can be changed based on a user's operation is performed by preparing image data on elements (objects) constituting respective parts of the image and by arranging each image data in accordance with a display mode to constitute an image actually displayed. Patent reference 1 discloses an apparatus in which data to be displayed is generated by combining a plurality of image data.

### [Patent reference 1] Published Japanese Patent Application No. H07-282269

In the meantime, there is a limitation in memory capacity of memory means incorporated in the above-described electronic device displaying the GUI image and the like, and therefore if image data constituting the GUI image and the like can be stored using as less memory capacity as possible, the memory capacity of the memory means incorporated in the device can be reduced, which makes a device configuration simplified. However, since the number of images to be displayed as the GUI image and the like in this kind of device tends to increase as the device becomes more multifunctional in actuality, there is such a problem that more memory capacity of the memory means is required.

Embodiments of the present invention seek to efficiently reduce a memory capacity required for displaying a GUI image and the like in this kind of electronic device.

Various respective aspects of the present invention are set out in the appended claims.

A method of storing image data according to an embodiment of the present invention includes, in the case where background image data and a plurality of display object data selectively combined with the background image data to be displayed are stored in predetermined memory means, the steps of: generating image data in which specific display object data selected from the display object data is combined with the background image data; performing compression-coding on the composite image data; storing the compression-coded data in the memory means separately from the background image data; and decompressing the compression-coded image data stored in the memory means to be displayed when displaying an image in which the specific display object data and the background image data are combined.

Accordingly, image data is compression-coded by a unit of one screen in a state of being actually displayed or being almost actually displayed and is stored in memory means.

According to the embodiment of the present invention, since image data is compression-coded by a unit of one screen in a state of being actually displayed and is stored in memory means, various kinds of GUI images and the like can be stored using less memory capacity.

Particularly, since specific display object data is not stored in the memory means and only the compression-coded image data combined with the background image data is stored, the memory capacity can be reduced greatly in comparison with a case in which each display object data is stored individually in bitmap data form or the like.

The method of storing image data according to an embodiment of the present invention further includes the steps of: comparing data volume of specific display object data with data volume of the compression-coded image data in which the specific display object data is combined with the background image data; and storing the compression-coded data in the memory means only when the compression-coded data volume is less than the specific display object data volume. Accordingly, the image combined with the background image data is compression-coded and stored only when there is the effectiveness in reducing the memory capacity; and processing of storing the compression-coded data can be performed efficiently.

The invention will now be described by way of example with reference to the accompanying drawings, throughout which like parts are referred to by like references, and in which:
FIG. 1 is a block diagram showing an example of a configuration of an apparatus according to an embodiment of the present invention;
FIG. 2 is a block diagram showing an example of a configuration of an image processing unit according to an embodiment of the present invention;
FIG. 3 is a flow chart showing processing according to an embodiment of the present invention;
FIG. 4 is an explanatory view showing a display example (initial screen);
FIG. 5 is an explanatory view showing a display example (speaker arrangement screen;
FIG. 6 is an explanatory view showing an example of each element constituting an image according to an embodiment of the present invention;
FIG. 7 is an explanatory view showing an example of each element constituting an image in related art; and
FIG. 8 is a table showing an example of settings of individual objects.

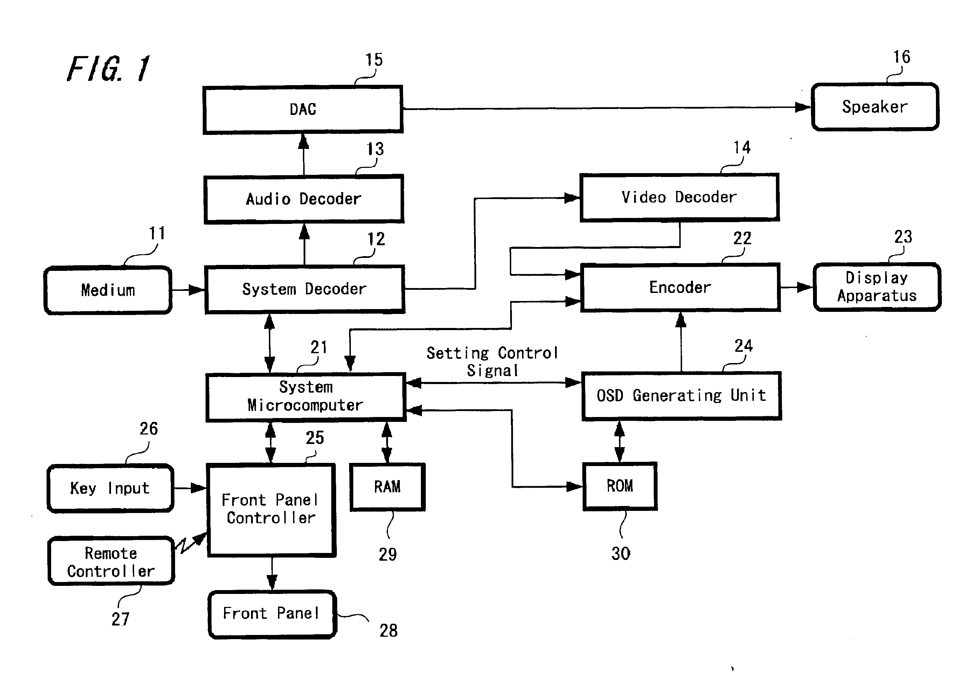

Hereinafter, an embodiment of the present invention is explained referring to FIGS. 1 through 6.

FIG. 1 is a diagram showing a configuration of a media reproducing apparatus to which processing according to this embodiment is applied. Data reproduced from a medium 11 such as a DVD or other optical discs and a memory card is supplied to a system decoder 12 and is separated into video data, audio data, and the like; the audio data is supplied to an audio decoder 13, in which decoding processing is performed; and the video data is supplied to a video decoder 14, in which decoding processing is performed. The audio data decoded in the audio decoder 13 is converted into an analog audio signal in a digital-analog converter 15, and the signal is supplied to a speaker 16 to be output. In FIG. 1, a circuit such as an amplifier is omitted.

The video data decoded in the video decoder 14 is supplied to an encoder 22 and is combined with an image data output from an OSD (On Screen Display) generating unit 24. The OSD generating unit 24 is a processor for generating image data to perform a display what is called "on screen display" of various kinds of characters and figures on the screen of a display apparatus, and processing of generating a GUI image described later on is also performed in the unit. In this embodiment, processing of decompressing the compression-coded image data stored in a ROM 30 is further performed in the unit. The image data (video data) combined in the encoder 22 is supplied to a display apparatus 23 after being made into image data of a format supplied to the display apparatus 23 in the encoder 22 and is displayed on the screen of the display apparatus (display) 23.

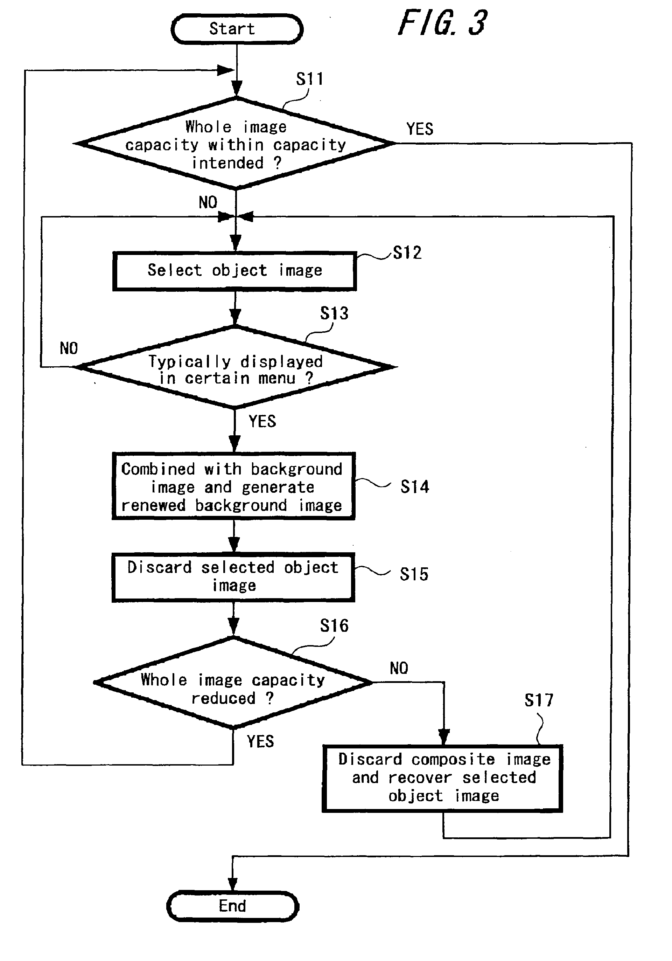

The image generating processing in the OSD generating unit 24 is performed based on a setting control signal from a system microcomputer 21. Image data on each element constituting the image data to be generated in the OSD generating unit 24 has been stored in the ROM 30, and a part of the image data stored in the ROM 30 is stored as the compression-coded image data. In this embodiment, whether or not the image data is compression-coded and stored is decided at a stage manufacturing a software installed in the apparatus (media reproducing apparatus) and whether or not the image data is compression-coded and stored is decided in judgment processing described later on (flow chart of FIG. 3). For example, an MPEG (Moving Picture Experts Group) method is applicable as a compression-coding method, and the compression-coding is performed by a unit of one screen displayed in the display apparatus 23 when performing the compression-coding. In the case where one screen is compression-coded by the MPEG method, data volume is reduced to a factor of several ten or less in comparison with the case where the image data of one screen is encoded in a bitmap form.

To the system microcomputer 21 is also connected a RAM 29 in which various kinds of operation programs and the like of the device are stored. Further, to the system microcomputer 21 is connected a front panel controller 25, and a display in a front panel 28 is performed based on an operation of a key input unit 26 or an operation of a remote controller 27. Further, in the case of an operation mode to display the GUI image and the like in the display apparatus 23, a command is sent to the system microcomputer 21 based on operation data supplied to the front panel controller 25 so as to generate corresponding image data in the OSD generating unit 24.

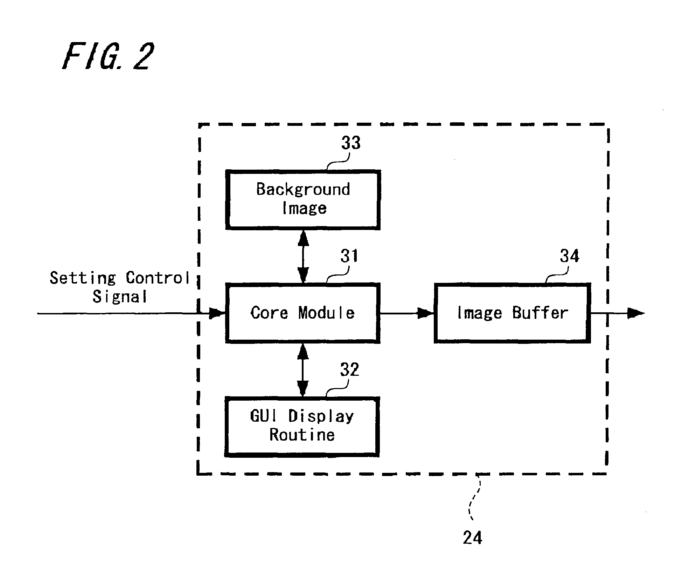

FIG. 2 is a diagram showing in detail a configuration of the OSD generating unit 24 and the periphery thereof. The setting control signal supplied from the system microcomputer 21 shown in FIG. 1 is supplied to a core module 31 in the OSD generating unit 24, image to be generated is set in processing in a GUI image display routine processing unit 32, and a GUI image is generated using image data read out from the ROM 30. In this case, the image data is superimposed on a background image read out from the ROM 30 and stored in a background image storage unit 33, if necessary. Further in this embodiment, a part of the GUI image is compression-coded and stored in the ROM 30 as image data on an actual display state of one screen which is superimposed on the background image, and the decompression processing from the compression-coding is performed in the core module 31 when displaying the compression-coded image data.

The image data generated in the core module 31 is stored in an image buffer 34, and the image data stored in the buffer 34 is supplied to the encoder 22 (refer to FIG. 1) and is made into the image data to be supplied to the display apparatus 23.

Next, referring to a flow chart of FIG. 3 an explanation is made with respect to an example of setting processing at a stage of manufacturing software incorporated in this apparatus, in which whether or not image data is compression-coded and stored when storing in the ROM 30 the image data constituting the GUI image. First, it is judged at the manufacturing stage of the software whether or not the whole capacity of the prepared image data on each element constituting the GUI image in the bitmap form falls within a range of a capacity that can be used to store the GUI image in the memory capacity of the memory means provided as the ROM 30 (Step S11). Here, when the whole capacity of the image data falls within the range of the capacity that can be used to store the GUI image, all the image data is stored in the ROM 30 as it is (for example, as is the bitmap data) without performing the compression-coding.

Then, in the case where it is judged at Step S11 that the whole capacity of the image data does not fall within the range of the capacity that can be used to store the GUI image, a specific object image is selected from the image data constituting the GUI image (Step S12), and it is judged whether or not the object image is an image typically displayed in a certain operation menu (Step S13). Here, when the object image is not the one typically displayed in the specific menu, the process returns to Step S12 and another object image is selected.

Further, when it is judged at Step S13 that the object image is the one typically displayed in the certain operation menu, the image is made into the image combined with the background image, which is an actual display mode; the composite image is made into a renewed background image used in the operation menu; and the composite renewed background image is made into image data compression-coded in a predetermined method (Step S14). In this case, the original image data on the object image selected at Step S12 is discarded from the data to be stored in the ROM 30 (Step S15).

After having performed the processing up to this point, it is judged whether or not the data volume has decreased from the whole capacity of the image data judged at Step S11 (Step S16), and the process returns to the judgment of Step S11 when it is judged that the data volume has decreased. When it is judged at Step S16 that the data volume has not decreased from the whole capacity of the image data before compression, the compression-coded image data generated at Step S14 is discarded; the image data on the original object image discarded at Step S15 is recovered (Step S17); the process returns to the judgment of Step S11; and another object image is selected at the next Step S12.

Further, a plurality of encoding rates may be provided to select an encoding rate when compressing and coding the image data, and in the case where it is judged at, for example, Step S16 of the flow chart in FIG. 3 that the whole memory capacity has not reduced, the compression-coding of a higher compression rate can be performed with respect to the same image data. However, the higher the compression rate becomes, the more the quality of the displayed image deteriorates, therefore it is necessary to determine in advance the allowable extent of compression in accordance with the intended use of the apparatus and the like.

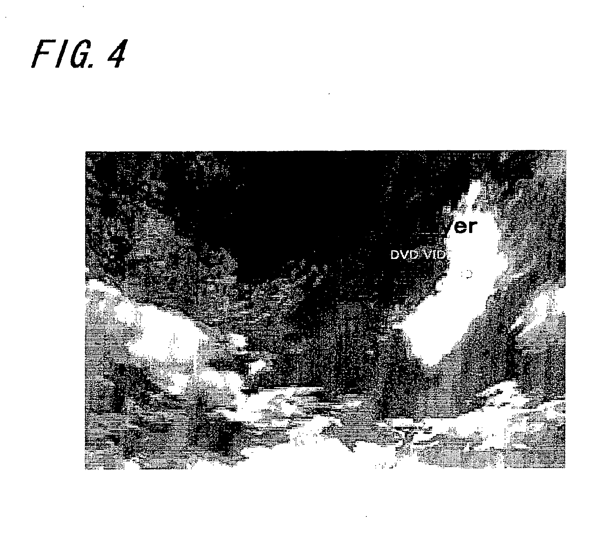

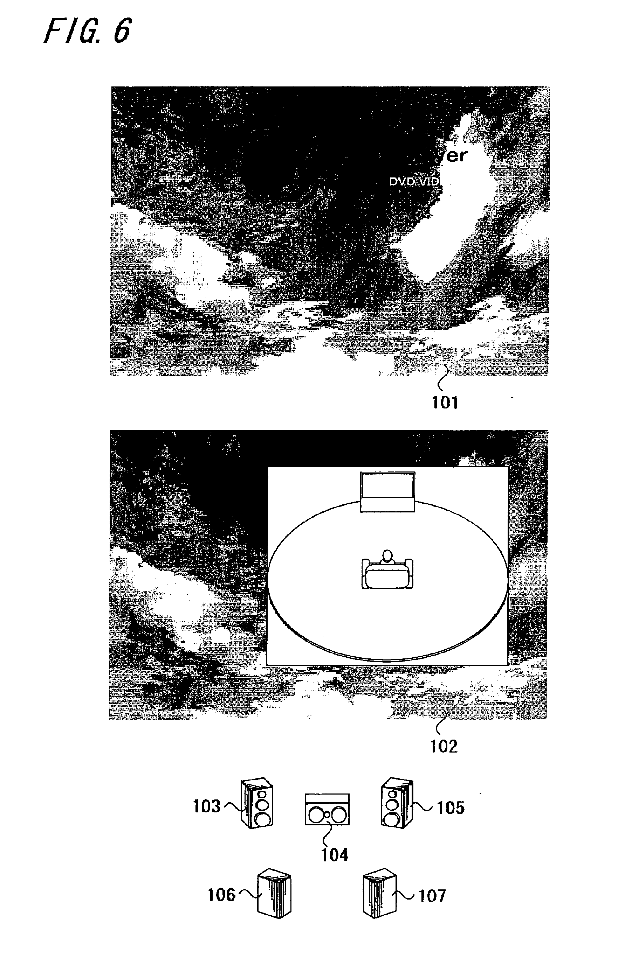

Next, an example of processing of actual image data is explained referring to display examples in FIGS. 4 and 5 and an example of elements of an image in FIG. 6. Those display examples show the same image as shown in FIGS. 7 and 8 as a related art example, that is, an example of displaying a GUI image to select an arrangement of speakers connected to an apparatus.

FIG. 4 is an initial screen displayed when starting the apparatus or on an occasion like that. With this initial screen being displayed, the key input unit 26 or the remote controller 27 is operated to set a mode selecting the speaker arrangement and an image showing either speaker arrangement shown in FIG. 5A or that shown in FIG. 5B is displayed. With the user's operation to select the display, the apparatus is set to perform an audio output suitable for the displayed speaker arrangement.

When such display is performed, as an example of the image data on each element constituting the display image in this embodiment, an initial screen 101 as shown in FIG. 6, for example, is stored in the ROM 30 as the image data in which the image of one screen is compression-coded as it is. Further, there is generated a composite image 102 in which image data (interior space status data) that displays a disc (elliptic ring) on which speakers are arranged is combined with the initial screen to be displayed thereon, and the image 102 is made into compression-coded image data and is stored in the ROM 30. The data volume of the compression-coded image data of the image 102 is less than the data volume of the image data in the bitmap form only for the image of the portion displaying the disc on which the speakers arranged (corresponding to an image 2 in FIG. 7).

Further, with respect to image data (individual speaker display data) 103 through 107 of speakers arranged on the disc, since images are displayed in small size on the screen as shown in FIG. 6 and have comparatively small data volume even in the image data of the bitmap form, the image data on the speakers 103 through 107 are stored in the ROM 30 as the image data of the bitmap form not compressed.

When the GUI image to select the speaker arrangement is displayed, the image data 102 is read out from the ROM 30; the processing of decompressing from the compression-coding is performed; processing of combining required image data in the speaker image data 103 through 107 to be arranged in the decompressed image data in accordance with an operation at that time is performed; and the display image shown in FIG. 5A or FIG. 5B is generated, for example. Note that the display size of the speakers may be made selectable in a plurality of stages at the time when composite processing of arranging the speaker image data 103 through 107 is performed.

In this way, since image data is stored in the ROM 30 and a GUI image or the like based on a user's operation is displayed using the stored image data, various images can be stored and displayed without increasing the memory capacity of the ROM 30 as the memory means. That is, since the compression-coding processing is performed by a unit of one screen size to be displayed using a predetermined method such as the MPEG method, the data compression of a high compression rate can be performed in comparatively simple processing. Further, since composite processing is performed in which comparatively small image data of bitmap form is pasted on a decompressed image of a compression-coded image, various kinds of GUI images as elements constituting an image to be stored can be displayed using data having less elements, and therefore the memory capacity can be greatly reduced in comparison with a case in which all image data constituting a GUI image is stored in the bitmap form as performed in the related art. For example, with performing such processing as shown in the flow chart of FIG. 3 when manufacturing software, a greater variety of GUI images and the like than before can be displayed without increasing the memory capacity of the ROM 30 as the memory means.

It should be noted that in the embodiment heretofore explained, the processing when displaying an image in a display apparatus connected to a media reproducing apparatus such as a DVD reproducing apparatus is explained, however it is also possible to perform similar processing when displaying a GUI image and the like in a front panel or the like incorporated in the apparatus. In addition, it is clear that embodiments the present invention are also applicable to other electronic devices than a media reproducing apparatus, when displaying an image such as a GUI image generated inside in a connected display apparatus or in an incorporated display unit. Needless to say, the content of an image to be displayed is not limited to the image of the speaker arrangement shown in figures such as FIG. 5.

Furthermore, in the embodiment described above, the image data is compression-coded when manufacturing software incorporated into the apparatus, however in other cases in which image data is similarly stored in a memory means having a limited capacity of a memory or the like, it is also possible to judge whether or not the image data similarly falls within the whole memory capacity and to judge whether or not the image data is compression-coded and stored.

Moreover, although the MPEG method is shown as an example of a compression-coding method and the bitmap form is shown as the image data not compressed in the embodiment described above, image data of other methods can also be used.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

Various respective aspects and features of the invention are defined in the appended claims. Features from the dependent claims may be combined with features of the independent claims as appropriate and not merely as explicitly set out in the claims.

## Claims

1. An image data storing method in which background image data and a plurality of display object data selectively combined with the background image data to be displayed are stored in predetermined memory means, comprising the steps of:
generating image data in which specific display object data selected from said display object data is combined with said background image data;
performing compression-coding on said composite image data;
storing said composite image data in said memory means separately from said background image data; and
decompressing said compression-coded image data stored in said memory means to be displayed, when displaying an image in which said specific display object data and said background image data are combined.

2. An image data storing method according to claim 1, wherein
said specific display object data is not stored in said memory means.

3. An image data storing method according to claim 1, wherein
said specific display object data is display data on a state of speaker arrangement.

4. An image data storing method according to claim 1, further comprising the steps of:
comparing data volume of said specific display object data with data volume of the compression-coded image data in which said specific display object data is combined with said background image data, and
storing the compression-coded data in said memory means only when the compression-coded data volume is less than said specific display object data volume.

5. An image processing apparatus in which background image data and a plurality of display object data selectively combined with the background image data to be displayed are stored in predetermined memory means and in which image data for display is generated using the stored background image data and display object data, comprising:
memory means for generating image data in which specific display object data selected from said display object data is combined with said background image data and for performing compression-coding on the composite image data to be stored separately from said background image data,
decompressing means for decompressing the compression-coded image data read out from said memory means, and
means for outputting or displaying the image data decompressed by said decompression means.

6. An image processing apparatus according to claim 5, wherein
said specific display object data is not stored in said memory means.

7. An image processing apparatus according to claim 5, wherein
data volume of said specific display object data is compared with data volume of the compression-coded image data in which said specific display object data is combined with said background image data, and the compression-coded data is stored in said memory means only when the compression-coded data volume is less than said specific display object data volume.
